# EUROPEAN PATENT APPLICATION

(11) **EP 4 585 389 A1**
(43) Date of publication of application: **16.07.2025**
(21) Application number: 25150448.6
(22) Date of filing: 07.01.2025
(51) Int. Cl.: B29C 45/76

(54) **PLASTICIZED STATE DIAGNOSING METHOD AND APPARATUS FOR INJECTION MOLDING MACHINE**

(30) Priority: 12.01.2024 JP 2024003034
(71) Applicant: Nissei Plastic Industrial Co., Ltd., Hanishina-gun, Nagano-ken 389-0693 (JP)
(72) Inventor: YODA, Hozumi, Nagano-ken (JP); SAKURADA, Yuichi, Nagano-ken (JP); FUKUDA, Yoshinao, Nagano-ken (JP)
(74) Representative: Haseltine Lake Kempner LLP

(57) **Abstract**

A plurality of AE sensors 6r, 6f are provided on a heating cylinder 2 at a plurality of different positions Xr, Xf in a forward-rearward direction Fs so as to detect AE waves AE waves We. Position data Dx related to a position where each AE wave We is generated are obtained on the basis of arrival times Tr, Tf of the AE wave We obtained from the AE sensors 6r, 6f. For each combination of a predetermined sampling period Tp and a predetermined set of the position data Dx, the number of times AE wave signals Sfe, etc. related to the generated AE wave We have exceeded a threshold value L set beforehand is obtained as attack number data Da. The number of AE wave signal components Sp having exceeded a threshold value set beforehand is obtained as event count data De. At least a generation pattern Ps of sets of the attack number data Da and sets of the event count data De which correspond to sets of the position data Dx is graphically displayed.

## Description

### Technical Field

The present invention relates to a plasticized state diagnosing method and a plasticized state diagnosing apparatus for an injection molding machine which are preferably used when a molding material supplied into a heating cylinder is plasticized by rotation of a screw.

### Background Art

In general, an injection apparatus of an injection molding machine has a function of plasticizing, by rotating a screw, a molding material (pellets or the like) supplied into a heating cylinder, heated by a heating unit, from a material supply section provided at a rear portion of the heating cylinder. Therefore, accurately grasping the plasticized state of the molding material in the heating cylinder is important from the viewpoint of avoiding occurrence of molding defects and ensuring high molding quality, and thus, various monitoring apparatus for grasping the plasticized state have been proposed.

Conventionally, as a monitoring apparatus of such a type, a material monitoring apparatus of an injection molding machine proposed by the present applicant and disclosed in Patent Document 1 has been known. An object of the material monitoring apparatus disclosed in Patent Document 1 is to quickly investigate the cause of occurrence of a defective molten state and take countermeasures, and to avoid plasticization failure in advance and realize an ideal plasticization process. Specifically, the material monitoring apparatus is used for an injection molding machine in which a heating cylinder is heated by a plurality of heating units, including a rear heating unit for heating a rear portion of the heating cylinder, and a molding material supplied into the heating cylinder from a material supply section provided at the rear portion of the heating cylinder is plasticized by rotating a screw. The material monitoring apparatus includes an acoustic emission wave sensing sensor which senses an acoustic emission wave generated when the molding material is deformed or sheared within the heating cylinder as a result of plasticization and converts the sensed acoustic emission wave to an electric signal, an acoustic emission detection section which detects, from the electric signal, quantitative acoustic emission data related to the deformation or shear of the molding material, and a material correspondent processing function section which performs a predetermined material correspondent processing based on use of the acoustic emission data.

### Summary of Invention

### Technical Problem

However, the above-described material monitoring apparatus disclosed in Patent Document 1 has the following problem to be solved.

Namely, since the above-described material monitoring apparatus utilizes the acoustic emission wave sensing sensor (AE sensor) which is disposed at a rear portion of the heating cylinder and which senses an acoustic emission wave generated when the molding material is deformed or sheared within the heating cylinder and converts the sensed acoustic emission wave to an electric signal, the material monitoring apparatus has a merit of enabling detection of quantitative acoustic emission data related to the deformation or shear of the molding material from the electric signal. However, since the detection is preformed quantitatively and locally, there has been a drawback that the detection is not necessarily sufficient, for example, from the viewpoint of obtaining more specific and practical information, such as the position in the heating cylinder where an acoustic wave is generated and the cause of the acoustic emission.

Therefore, there has been room for further improvement from the viewpoint of securing plasticization information along a plane of the heating cylinder (three-dimensional plasticization information) and qualitative plasticization information, thereby realizing a more practical, convenient, and easy-to-use monitoring device (plasticized state diagnosing apparatus).

An object of the present invention is to provide a plasticized state diagnosing method and a plasticized state diagnosing apparatus for an injection molding machine which have solved the problem of the background technique.

### Solution to Problem

A plasticized state diagnosing method according to the present invention is used for an injection molding machine M in which a molding material R supplied into a heating cylinder 2 heated by a heating unit 3f, etc. is plasticized by rotation of a screw 5. The molding material R is supplied from a material supply section 4 provided at a rear portion of the heating cylinder 2. The plasticized state diagnosing method diagnoses the plasticized state of the molding material R.

In order solve the above-described problem, the plasticized state diagnosing method comprises the steps of:
disposing a plurality of AE sensors 6r, 6f on the heating cylinder 2 at a plurality of different positions Xr, Xf in a forward-rearward direction Fs so as to detect AE waves We;
obtaining position data Dx related to a position where each AE wave is generated on the basis of arrival times tr, tf of the AE wave We obtained from the AE sensors 6r, 6f;
for each combination of a predetermined sampling period Tp and a predetermined set of the position data Dx, obtaining, as attack number data Da, the number of times AE wave signals Sre, Sfe related to the generated AE wave We have exceeded a threshold value L set beforehand, and obtaining, as event count data De, the number of AE wave components Sp having exceeded a threshold value L set beforehand; and
graphically displaying at least a generation pattern Ps of sets of the attack number data Da and sets of the event count data De which correspond to sets of the position data Dx.

A plasticized state diagnosing apparatus 1 according to the present invention is used for an injection molding machine M in which a molding material R supplied into a heating cylinder 2 heated by a heating unit 3f, etc. is plasticized by rotation of a screw 5. The molding material R is supplied from a material supply section 4 provided at a rear portion of the heating cylinder 2. The plasticized state diagnosing method diagnoses the plasticized state of the molding material R.

In order solve the above-described problem, the plasticized state diagnosing apparatus 1 comprises:
a plurality of AE sensors 6r, 6f disposed on the heating cylinder 2 at a plurality of different positions Xr, Xf in a forward-rearward direction Fs so as to detect AE waves We, a data processing section 7, and a graphic display section 8.

The data processing section 7 comprises:
a position computing processing section Ex which obtains position data Dx related to a position where each AE wave We is generated on the basis of arrival times tr, tf of the AE wave We obtained from the AE sensors 6r, 6f;
an attack number computing process section Ea which obtains, for each combination of a predetermined sampling period Tp and a predetermined set of the position data Dx, as attack number data Da, the number of times AE wave signals Sre, Sfe related to the generated AE wave We have exceeded a threshold value set beforehand; and
an event count computing process section Ee which obtains, as event count data De, the number of AE wave components Sp having exceeded a threshold value L set beforehand.

The graphic display section 8 graphically displays at least a generation pattern Ps of sets of the attack number data Da and sets of the event count data De which correspond to sets of the position data Dx.

In preferred modes of the plasticized state diagnosing method according to the present invention, the threshold values L for detection of the attack number data Da and the event count data De may be set to the same value or values different from each other. In addition, a noise removal process may be performed for the detection signals obtained from the AE sensors 6r, 6f, wherein the noise removal process removes, as noise components Np, signals mixedly present other than those generated as a result of a plasticization process by the heating cylinder 2, and a filtering process for selecting signals of a particular frequency Bs set beforehand or within a particular frequency band set beforehand may be performed for the detection signals obtained from the AE sensors 6r, 6f.

In preferred modes of the plasticized state diagnosing apparatus according to the present invention, the graphic display section 8 may display, in a graph form, the generation pattern Ps of the attack number data Da and the event count data De which correspond to the position data Dx. The AE sensors 6r, 6f may include a first AE sensor 6r and a second AE sensor 6f, the first AE sensor 6r may be disposed on the rear side of the heating cylinder 2, and the second AE sensor 6f may be disposed on the forward side of the heating cylinder 2. Each of the AE sensors 6r, 6f may be separately attached to the heating cylinder 2.

### Advantageous Effects of Invention

The plasticized state diagnosing method and the plasticized state diagnosing apparatus 1 for the injection molding machine M according to the invention achieve the following remarkable effects.
(1) The AE sensors 6r and 6f are disposed on the heating cylinder 2 at the plurality of different positions Xr and Xf in the forward-rearward direction Fs, and the position data Dx, the attack number data Da, and the event count data De are obtained from the detection signal from the AE sensors 6r, 6f, and the generation pattern Ps of sets of the attack number data Da and sets of the event count data De which correspond to sets of the position data Dx is graphically displayed. Therefore, it is possible to accurately obtain information related to generation of AE waves We, from the viewpoint of the position along the plane of the heating cylinder 2 (three-dimensional position) and qualitative information related to generation of AE waves We, such as the position in the heating cylinder 2 where each AE wave We is generated and the cause of generation of the AE wave We. Thus, it becomes possible to realize a more practical, convenient, and easy-to-use monitoring device 1, and perform accurate and reliable diagnosis for determining whether or not the plasticized state is good and for trouble judgment.
(2) In a preferred mode of the plasticized state diagnosing method, the threshold values L for detection of the attack number data Da and the event count data De can be set to the same value or values different from each other. Therefore, it is possible to set flexible and optimum threshold values L which correspond to the attack number data Da and the event count data De, respectively, whereby accurate attack number data Da and event count data De associated with the AE waves We can be obtained.
(3) In a preferred mode of the plasticized state diagnosing method, the noise removal process is performed on the detection signals obtained from the AE sensors 6r, 6f, wherein the noise removal process removes, as noise components Np, signals mixedly present other than those generated as a result of the plasticization process by the heating cylinder 2. Since it is possible to eliminate environmental noises; i.e., useless noise components Np (disturbance) other than the AE wave signals Sre, Sfe generated as a result of plasticization of the molding material R, the AE wave signals Sre and Sfe can be obtained more accurately.
(4) In a preferred mode of the plasticized state diagnosing method, the filtering process for selecting signals of a particular frequency Bs set beforehand or within a particular frequency band set beforehand is performed on the detection signals obtained from the AE sensors 6r, 6f. Since it becomes possible to selectively detect the AE wave signals Sre and Sfe obtained as a result of plasticization of the molding material R; specifically, AE waves We generated when the molding material R breaks and AE waves We generated when the molding material R collides with metal, the plasticized state and the trouble occurrence state can be diagnosed more accurately.
(5) In a preferred mode of the plasticized state diagnosing apparatus, the graphic display section 8 is configured to display, in a graph form, the generation pattern Ps of sets of the attack number data Da and sets of the event count data De which correspond to sets of the position data Dx. Since the generation pattern Ps can be graphically displayed by combining general-purpose graphs such as bar graphs and line graphs, it is possible to easily and quickly grasp the plasticized state and the trouble occurrence state from the produced generation pattern Ps.
(6) In a preferred mode of the plasticized state diagnosing apparatus, the AE sensors 6r, 6f include a first AE sensor 6r and a second AE sensor 6f, the first AE sensor 6r is disposed on the rear side of the heating cylinder 2, and the second AE sensor 6f is disposed on the forward side of the heating cylinder 2. Since it is possible to detect a series of states, from the solid state of a molding material (e.g., pellets) in the vicinity of the material supply section 4 to the molten state after plasticization, the plasticized state in the heating cylinder 2 can be grasped in a sufficient and optimal state.
(7) In a preferred mode of the plasticized state diagnosing apparatus, each of the AE sensors 6r, 6f is separately attached to the heating cylinder 2. Since separate attachment of each AE sensor to the heating cylinder 2 enables flexible selection of disposing positions, thereby enabling disposition of the AE sensor without interfering with other temperature sensors, other functions, etc., it is possible to increase the degree of freedom of arrangement and to avoid the complexity around the heating cylinder 2 and increase the efficiency of space occupancy.

### Brief Description of Drawings

Fig. 1 is a structural view of an injection apparatus of an injection molding machine which includes a plasticized state diagnosing apparatus according to a preferred embodiment of the present invention;
Fig. 2 is a functional block diagram showing the entire configuration (system) of the plasticized state diagnosing apparatus;
Fig. 3 is a perspective outside showing a state in which AE sensors provided in the plasticized state diagnosing apparatus are attached to a heating cylinder;
Fig. 4 is a sectional front view showing a state in which the AE sensors provided in the plasticized state diagnosing apparatus are attached to the heating cylinder;
Fig. 5 is a perspective view which shows, by a cut-out section, the internal structure of a mechanism for attaching the AE sensor provided in the plasticized state diagnosing apparatus;
Fig. 6 is a flowchart showing the steps of a plasticized state diagnosing method according to the preferred embodiment of the present invention;
Fig. 7 is a signal waveform chart used for describing a method of determining a generation position from AE wave signals obtained from the plasticized state diagnosing apparatus;
Fig. 8 is a signal waveform chart used for describing a method of obtaining an attack number and an event count from the AE wave signals obtained from the plasticized state diagnosing apparatus;
Fig. 9 is a diagram showing a display screen of a graphic display section provided in the plasticized state diagnosing apparatus;
Fig. 10 is a display screen diagram showing one example of a generation pattern displayed by the graphic display section;
Fig. 11 is a display screen diagram showing another example of the generation pattern displayed by the graphic display section;
Fig. 12 is a display screen diagram showing another example of the generation pattern displayed by the graphic display section; and
Fig. 13 is a display screen diagram showing another example of the generation pattern displayed by the graphic display section.

### Description of Embodiments

Next, a preferred embodiment of the present invention will be described in detail based on the drawings.

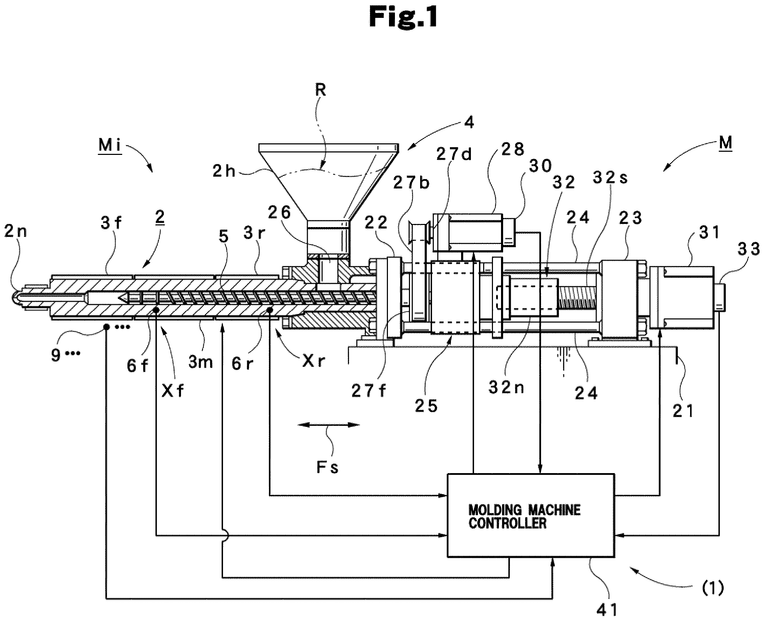

First, the overall structure of an injection molding machine M which includes a plasticized state diagnosing apparatus 1 according to the present embodiment will be briefly described with reference to Fig. 1.

The injection molding machine M includes an injection apparatus Mi shown in Fig. 1 and a die clamping apparatus which is not shown. The injection apparatus Mi is mounted on the top surface of a movable base 21 which can be moved in a forward-rearward direction Fs by a drive section for nozzle touch. Reference sign 22 denotes a forward support plate fixed to the top surface of a forward portion of the movable base 21, and reference sign 23 denotes a rear support plate fixed to the top surface of a rear portion of the movable base 21. Four guide shafts 24 are provided between the forward support plate 22 and the rear support plate 23, and a slide unit 25 is slidably mounted on the guide shafts 24.

The rear end of a heating cylinder 2 is attached to the front face of the forward support plate 22 such that a forward portion of the heating cylinder 2 protrudes forward. This heating cylinder 2 has an injection nozzle 2n at its forward end and has a hopper 2h provided at the upper end of its rear portion. A lower end supply opening of the hopper 2h communicates with the interior of the heating cylinder 2 through a material supply passage 26 which extends vertically. The material supply passage 26 and the hopper 2h constitute a material supply section 4. A plurality of heating units 3f, 3m, and 3r, each of which is composed of a band heater for heating the heating cylinder 2, are attached to the outer circumferential surface of the heating cylinder 2, including the injection nozzle 2n, in this order from the forward side toward the rear side in a forward-rearward direction Fs. Each of the heating units 3f, 3m, and 3r is attached separately from each other, and a plurality of sensors 9 for detecting the heating temperatures of respective heating zones are attached. Feedback control of the heating temperatures is performed by a molding machine controller 41.

A screw 5 is inserted into the heating cylinder 2, and a rear-end-side portion of the screw 5 extends, through an opening of the forward support plate 22, to the rear side of the forward support plate 22. A driven pulley 27f is rotatably attached to a front face portion of the slide unit 25, and the rear end of the screw 5 is coupled with the driven pully 27f at its center position. A servo motor 28 for rotating the screw is fixed to the top face of the slide unit 25. A drive pulley 27d is fixed to the rotation shaft of the servo motor 28, and a timing belt 27b is looped around the drive pulley 27d and the driven pulley 27f, thereby forming a rotation transmission mechanism. A rotary encoder 30 for detecting the rotation (rotational speed) of the servo motor 28 is attached to the servo motor 28.

A servo motor 31 for moving the screw forward and rearward is fixed to the rear face of the rear support plate 23. The rear end of a screw portion 32s, which constitutes a ball screw mechanism 32, is rotatably attached the front face of the rear support plate 23, and the rotation shaft of the servo motor 31 is coupled with the rear end of the screw portion 32s. A rotary encoder 33 for detecting the rotation (rotational speed) of the servo motor 31 is attached to the servo motor 31. The forward end of a nut portion 32n, which constitutes the ball screw mechanism 32, is fixed to a rear face portion of the slide unit 25, and a forward-end-side portion of the screw portion 32s is in screw engagement with the nut portion 32n.

Reference sign 41 denotes a molding machine controller which controls the entirety of the injection molding machine M and has a computer function. Namely, the molding machine controller 41 includes pieces of hardware such as a CPU, a memory, etc. and includes a processing program (software) for executing various control processes, including various computing processes and sequence control. The servo motors 28 and 31 and the heating units 3f, 3m, and 3r, which are described above, are connected to an output side port of the molding machine controller 41, and the above-described rotary encoders 30 and 33 and the temperature sensors 9 provided for the heating units 3f, 3m, and 3r are connected to an input side port of the molding machine controller 41. The above is the basic configuration of the injection apparatus Mi.

Next, the configuration of the plasticized state diagnosing apparatus 1 according to the present embodiment will be described with reference to Figs. 1 to 5 and Fig. 9.

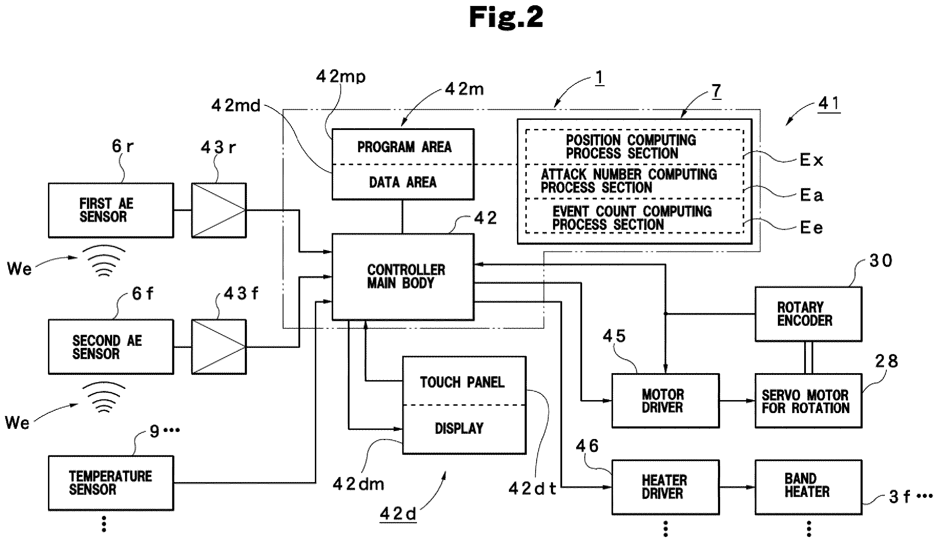

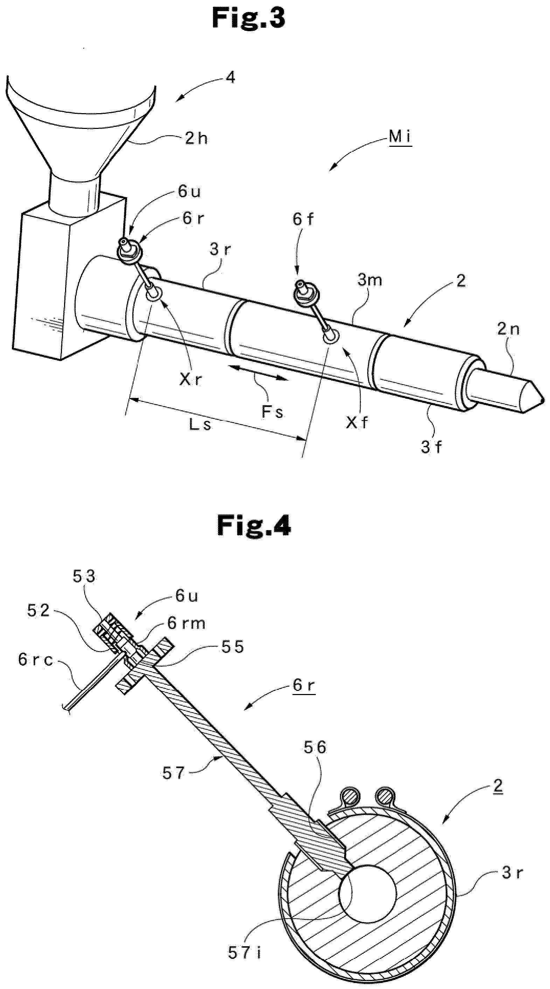

As shown in Fig. 3 (Figs. 1 and 2), the plasticized state diagnosing apparatus 1 includes a plurality of AE sensors (acoustic emission wave sensing sensor) 6r each composed of a piezoelectric ceramic element or the like for detecting AE (acoustic emission) waves We and disposed on the heating cylinder 2 at a plurality of different positions Xr, etc. in the forward-rearward direction Fs.

In the illustrated example, the plasticized state diagnosing apparatus 1 includes two AE sensors; i.e., a first AE sensor 6r and a second AE sensor 6f disposed at two positions Xr and Xf. As shown in Fig. 3, the first AE sensor 6r is disposed on the rear side of the heating cylinder 2; specifically, at the position Xr near the rear end of the rear heating unit 3r. The second AE sensor 6f is disposed on the forward side of the heating cylinder 2; specifically, at the forward-shifted position Xf on the middle heating unit 3m.

In the case where the AE sensors 6r and 6f are disposed such that the first AE sensor 6r is located on the rear side of the heating cylinder 2 and the second AE sensor 6f is located on the forward side of the heating cylinder 2, since it is possible to detect a series of states, from the solid state of a molding material (e.g., pellets) in the vicinity of the material supply section 4 to the molten state after plasticization, the plasticized state in the heating cylinder 2 can be grasped in a sufficient and optimal state.

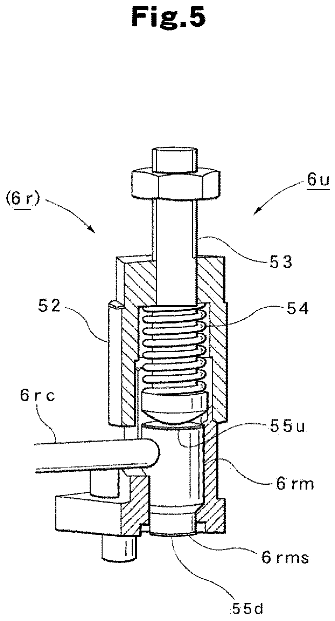

Fig. 5 shows an AE sensor unit 6u which accommodates a sensor main body 6rm of the AE sensor 6r (a sensor unit AE having the same structure as the sensor unit 6u is provided for the AE sensor 6f). The AE sensor unit 6u has a circular tubular sensor holder 52. The sensor main body 6rm having a circular columnar shape is disposed on the lower side of a space inside the sensor holder 52, and a connection lead 6rc of the sensor main body 6rm extends to the outside through a circumferential wall portion of the sensor holder 52. A sensing surface (lower end surface) 6rms of the sensor main body 6rm is exposed to the outside from the lower end of the sensor holder 52. A plunger 53 is disposed on the upper side of the space inside the sensor holder 52 such that the plunger 53 can be moved in the axial direction. A coil spring 54 for urging the plunger 53 downward (toward the sensor main body 6rm side) is attached to the plunger 53. By virtue of this structure, the sensor main body 6rm is fixed as a result of pressing by the forward end of the plunger 53, and thus, stable measurement is possible. Notably, an alumina sheet 55u is interposed between the forward end of the plunger 53 and the upper end surface of the sensor main body 6rm, and an alumina sheet 55d is attached to the lower end surface of the sensor main body 6rm. This configuration can reduce electrical noises.

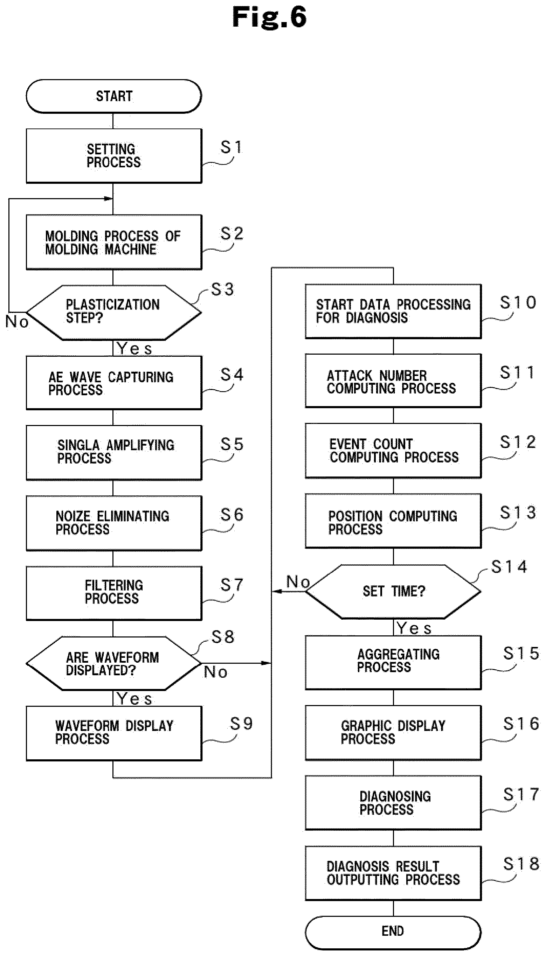

Attachment of the AE sensor 6r (also, the AE sensor 6f) to the heating cylinder 2 can be performed as shown in Figs. 4 and 6. As shown in Fig. 4, a threaded attachment hole 56 extending in the radial direction of the heating cylinder 2 is formed at a predetermined position in the empty space on the peripheral surface of the heating cylinder 2. A waveguide rod 57 is screwed and fixed to the threaded mounting hole 56. The distal end of the waveguide rod 57; i.e., an inner end surface 57i is flush with an inner wall surface of the heating cylinder 2. The lower end surface of the above-described AE sensor unit 6u is fixedly attached to the rear end surface of the waveguide rod 57. The above-described alumina sheet 55d intervenes between the lower end surface of the sensor main body 6rm and the outer end surface of the waveguide rod 57.

Since separate attachment of each AE sensor to the heating cylinder 2 enables flexible selection of disposing positions, such as disposition of the AE sensor without interfering with other temperature sensors, other functions, etc., it is possible to increase the degree of freedom of arrangement and to avoid the complexity around the heating cylinder 2 and increase the efficiency of space occupancy.

As shown in Fig. 2, the first AE sensor 6r and the second AE sensor 6f are connected to a sensor port of the controller main body 42 in the molding machine controller 41 via preamplifiers 43r and 43f, respectively. The above-described temperature sensors 9 are also connected to the sensor port of the controller main body 42. The controller main body 42 includes pieces of hardware such as a CPU, and functions as a main portion of a computer system which performs various computing processes, various control processes, etc.

Notably, the illustrated example shows the case where the molding machine controller 41 is utilized. However, a separate high-speed processing computer may be prepared. In this case, the outputs of the first AE sensor 6r and the second AE sensor 6f are input to the high-speed processing computer so as to perform necessary analysis processing by using a separate processing system.

The internal memory 42m has a program area 42mp which stores various processing programs (software) for executing various computing processes and various control processes (sequence controls) and a data area 42md in which various data (databases) can be memorized. In particular, a diagnosing process program for realizing the plasticized state diagnosing method according to the present embodiment is stored in the program area 42mp.

Therefore, the molding machine controller 41, which includes the internal memory 42m and the controller main body 42, functions as a main portion of the plasticized state diagnosing apparatus 1; namely, as shown in Fig. 2, the molding machine controller 41 functions as a data processing section 7 for data processing of the AE wave signals Sre and Sfe obtained from the AE sensors 6r and 6f. Namely, by virtue of the diagnosing process program, the molding machine controller 41 functions as the data processing section 7 which includes a position computing process section Ex, an attack number computing process section Ea, and an event count computing process section Ee. The position computing process section Ex obtains position data Dx related to the generation position of AE waves We on the basis of the arrival times tr and tf of AE waves We obtained from the AE sensors 6r and 6f. The attack number computing process section Ea obtains, for each combination of a predetermined sampling period Tp and a predetermined set of the position data Dx, as attack number data Da, the number of times the AE wave signals Sre and Sfe related to the generated AE wave We having exceed a threshold value L set beforehand. The event count computing process section Ee obtains, as event count data De, the number of AE wave components Sp having exceeded a threshold value L.

A display 42d is attached to the controller main body 42. The display 42d includes a display main body 42dm and a touch panel 42dt attached to the display main body 42dm. Accordingly, an operator can perform various setting operations, selecting operations, etc. by using this touch panel 42dt. The display 42d constitutes a graphic display section 8 which graphically displays at least the generation pattern Ps of sets of the attack number data Da and sets of the event count data De which correspond to sets of the position data Dx.

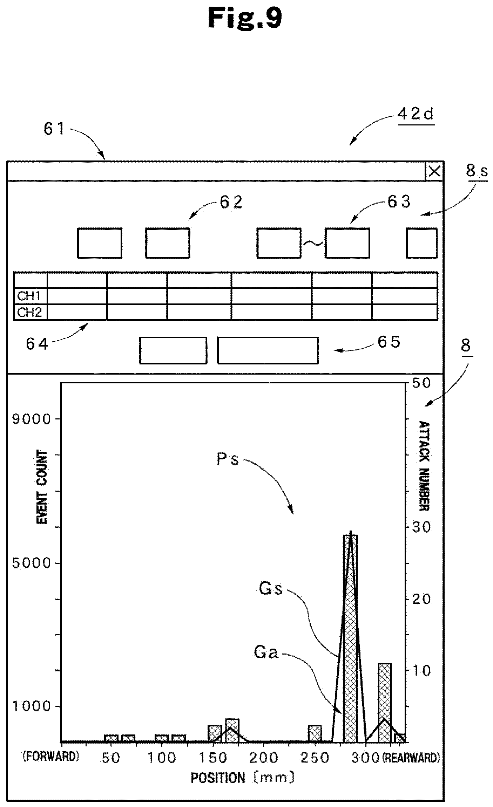

Fig. 9 shows an example of a display screen 61 of the display 42d including the graphic display section 8. This display screen 61 has a screen configuration for displaying a setting section 8s on the upper side of the screen and displaying the graphic display section 8 on the lower side of the screen.

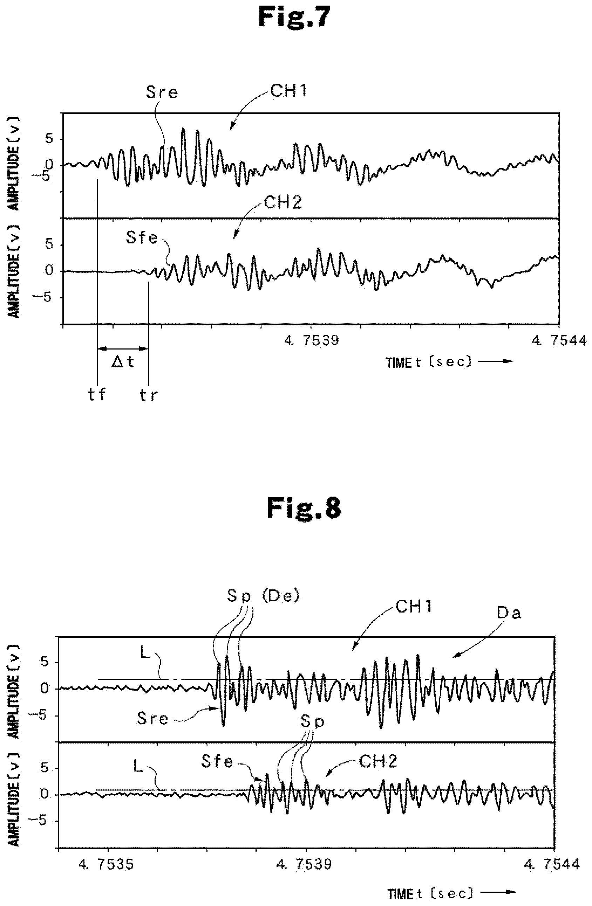

The setting section 8s includes a threshold value setting section 62 for setting the threshold values L, an aggregation section setting section 63 for setting an aggregation section (period), a data display section 64 for displaying various data values, etc., a switching key 65, etc. The threshold value setting section 62 enables setting of respective threshold values L for the AE wave signals Sre and Sfe obtained from the AE sensors 6r and 6f (see Fig. 8). The respective threshold values L may be set to the same value or values different from each other. Since, as mentioned above, the respective threshold values L can be set such that the respective threshold values L are identical with each other or such that the respective threshold values L are different from each other, it is possible to perform highly flexible and reliable detection of AE waves We in consideration of the different disposing positions of the AE sensors 6r and 6f.

The threshold value setting section 62 enables setting of the respective threshold values L for detecting the attack number data Da and the event count data De. At the time of setting, the display can be switched by the switching key 65. In this case as well, the respective threshold values L may be set to the same value or values different from each other. Since, as mentioned above, the respective threshold values L can be set such that the respective threshold values L are identical with each other or such that the respective threshold values L are different from each other, it is possible to set flexible and optimum threshold values L which correspond to the attack number data Da and the event count data De, respectively, whereby accurate attack number data Da and event count data De associated with AE waves We can be obtained.

The aggregation section setting section 63 enables setting of a sampling period Tp by setting the start of the sampling period Tp (e.g., "0") and the end of the sampling period Tp (e.g., "10"), thereby setting the length of the sampling period Tp (10 seconds in this example). Set values such as a band-pass frequency (frequency band) for a filtering process, an event count value, an attack number value, etc. and computed values are displayed in the data display section 64. In addition, switching among various display functions and various setting functions can be performed by using the switching key 65.

The graphic display section 8 has a function of graphically displaying at least the generation pattern Ps of the attack number data Da and the event count data De which correspond to the position data Dx. The graphic display section 8 shown as an example enables graph form display in which the position data Dx in the heating cylinder 2 in the forward-rearward direction Fs is shown, with graduations, on the horizontal axis, and the event count data De and the attack number data Da are shown, with graduations, on the vertical axis. Specifically, the attack number data Da is displayed by a bar graph Ga and the event count data De is displayed by a line graph Gs.

In the case where, as described above, the graphic display section 8 is configured to display the generation pattern Ps of sets of the attack number data Da and sets of the event count data De which correspond to sets of the position data Dx in a graph form, since the generation pattern Ps can be graphically displayed by combining general-purpose graphs such as bar graphs and line graphs, it is possible to easily and quickly grasp the plasticized state and the trouble occurrence state from the produced generation pattern Ps.

Notably, an example of a method for obtaining the position data Dx, the attack number data Da, and the event count data De will be described specifically together with the steps of the plasticized state diagnosing method which will be described later.

The above-described servo motor 28 for rotating the screw is connected to the output port of the controller main body 42 through a motor driver (servo amplifier) 45. The number of revolutions (rotation speed) of the servo motor 28 for rotating the screw is detected by the rotary encoder 30, and the detected rotation speed signal is provided to the motor driver 45 and the controller main body 42. The respective band heaters of the above-described heating units 3f, 3m, and 3r are connected to the output port of the controller main body 42 through a heater driver 46.

Next, the operation (function) of the plasticized state diagnosing apparatus 1 according to the present invention (i.e., the plasticized state diagnosing method) will be described, together with the operation of the injection apparatus Mi in the injection molding machine M, in accordance with the flowchart shown in Fig. 6 while referring to Figs. 1 to 5 and Figs. 7 to 13.

First, various setting processes necessary for executing the plasticized state diagnosing method are performed by using the setting section 8s of the display screen 61 of the display 42d shown in Fig. 9 (step S1).

Specifically, by using the threshold value setting section 62, an operator sets the threshold value L for the AE wave signal Sre obtained from the first AE sensor 6r and displayed in a CH1 section, and sets the threshold value L for the AE wave signal Sfe obtained from the second AE sensor 6f and displayed in a CH2 section. These threshold values L may be the same or different. Notably, it is possible to set the threshold value L only for one of CH1 and CH2. In the example shown in Fig. 8, the threshold values L are set to about 0.2 V.

In addition, the operator sets the sampling period Ts by using the aggregation section setting section 63. In the case of the illustrated example, the sampling period Ts is set to about 10 seconds. Moreover, by selectively displaying setting screens by using the switching key 65, the operator can set various set values such as the band-pass frequency of the band-pass filter (for example, 20 to 80 kHz (plastic breakage)), and ON/OFF of a noise cancellation waveform (for example, a registered waveform measured beforehand).

After completion of the setting processes, the operator starts operation of the injection molding machine M; namely, starts a molding process (step S2). The molding machine controller 41 monitors the molding process during operation of the injection molding machine M. When a plasticization step is started, the controller main body 42 captures detection signals based on AE waves We obtained from the AE sensors 6r and 6f (step S3 and S4). In this case, the detection signals obtained from the AE sensors 6r and 6f are provided to the controller main body 42 after being amplified by pre-amplifiers 43r and 43f, respectively, (step S5).

In the controller main body 42, a noise removal process is performed on the amplified detection signals (step S6). The noise removal process removes noise components Np that are not related to the plasticized state in the heating cylinder 2. In this case, noise frequency components set beforehand may be removed. Alternatively, operation sounds of the injection molding machine M, etc. may be measured in advance and registered as noise components Np so as to perform a noise component cancellation process. Notably, if necessary, the type of noise components Np can be selected or the noise component cancellation process can be turned on and off.

In the case where, as described above, the noise elimination process of removing, as noise components Np, signals mixedly sensed other than signals generated as a result of the plasticization process by the heating cylinder 2 is performed on the detection signals obtained from the AE sensors 6r and 6f, since it is possible to eliminate environmental noises; i.e., useless noise components Np (disturbance) other than the AE wave signals generated as a result of plasticization of the molding material R, the AE wave signals Sre and Sfe can be obtained more accurately.

A filtering process for selecting signals of a particular frequency Bs is performed on the detection signals having undergone the noise removal process (step S7). Thus, it is possible to capture detection signals of the particular frequency Bs, such as those in a frequency band (20 to 80 kHz) generated as a result of breakage of the molding material R and those in a frequency band (200 to 350 kHz) generated as a result of collision with metal. In the case of the illustrated example, the frequency of detection signals to be selected is set by using the band-pass frequency Bs. However, the frequencies of detection signals to be selected may be set by using a band-pass frequency band having a predetermined band width.

In the case where a filtering process for selecting signals of the particular frequency Bs set beforehand or in the particular frequency band set beforehand is performed on the detection signals obtained from the AE sensors 6r and 6f, it becomes possible to selectively detect the AE wave signals Sre and Sfe obtained as a result of plasticization of the molding material R; specifically, AE waves generated when the molding material R breaks and AE waves We generated when the molding material R collides with metal, whereby the plasticized state and the trouble occurrence state can be diagnosed more accurately.

Fig. 7 shows the signal waveforms of the AE wave signals Sre and Sfe having undergone the noise removal process, and the Fig. 8 shows the signal waveforms of the AE wave signals Sre and Sfe having undergone the filtering process. The operator can display these signal waveforms on different screen by operating the above-described switching key 65 (steps S8 and S9).

Since the detection signals having undergone the filtering process serve as the AE wave signals Sre and Sfe, a computing process related to diagnosis data processing is performed by the data processing section 7 shown in Fig. 2 (step S10). In this case, the computing process is performed during the sampling period Ts (10 seconds in the case of the illustrated example) set by using the aggregation section setting section 63.

Now, we assume the case where an AE wave We having a relatively large amplitude which exceeds the threshold value L as shown in Fig. 8 is generated during the sampling period Ts. In this case, an attack number computing process is first performed by the attack number computing process section Ea (step S11). Namely, the attack number computing process section Ea determines whether or not the magnitude of the amplitude of the AE wave signal Sre (Sfe) is greater than the threshold value L. When the magnitude of the amplitude of the AE wave signal Sre (Sfe) is greater than the threshold value L, the attack number computing process section Ea determines that an attack has occurred, and produces the attack number data Da representing "one" time.

Next, an event count computing process is performed by the event count computing process section Ee (step S12). Namely, the event count computing process section Ee counts the number of waveform components Sp having exceeded the threshold value L, and produces the event count data De representing the number of waveform components Sp.

Furthermore, a process of computing the position data Dx is performed by the position computing process section Ex on the basis of the obtained wave signals Sre and Sfe (step S13). The position computing process section Ex obtains the position data Dx related to the generation position of each AE wave We on the basis of the arrival times tr and tf of the AE wave We obtained from the AE sensors 6r and 6f. Namely, as shown in Fig. 7, a time difference Δt due to delay is produced between the arrival times tr and tf of the AE wave We in the AE wave signals Sre and Sfe obtained from the AE sensors 6r and 6f. Therefore, the generation position of the AE wave We is obtained, as position data Dx, on the basis of the disposing positions Xr and Xf of the AE sensors 6r and 6f, the time difference Δt, and the sound speed. Notably, the sound speed used here is the longitudinal sound speed in iron.

As a result of the above-described series of data processing steps, the attack number data Da, the event count data De, and the position data Dx are associated with one another. Therefore, the attack number data Da, the event count data De, and the position data Dx are temporarily registered while being associated with one another. The above is the data processing in the case where one attack has occurred. After that, the attack number data Da, the event count data De, and the position data Dx are obtained by the same processing steps when a next attack occurs in the sampling period Ts (steps S14, S10, etc.). The series of data processing steps are performed until the sampling period Ts set beforehand ends.

When the sampling period Ts ends, a process of aggregating sets of the attack number data Da, sets of the event count data De, and sets of the position data Dx, which are produced in the sampling period Ts and are associated with one another is performed (step S15). As shown in Fig. 9, the sets of the attack number data Da, the sets of the event count data De, and the sets of the position data Dx, which are aggregated, are graphically displayed by the graphic display section 8 (step S16).

The graphic display shown as an example is display in a graph form, in which the horizontal axis represents the position of the heating cylinder 2 in the forward-rearward direction Fs. Successive position ranges (for example, at intervals of 20 mm) are set. When position data Dx falling in one of these position ranges is present, the aggregated value of the sets of attack number data Da corresponding to the position data Dx is displayed by a bar graph Ga, and the aggregated value of the sets of event count data De corresponding to the position data Dx is displayed by a line graph Gs.

As a result, the generation pattern Ps represented by the bar graph Ga and the line graph Gs is displayed. On the basis of the displayed generation pattern Ps, the operator or an AI (artificial intelligence) can perform a predetermined diagnosing process, including determination as to whether or not the plasticized state is good (step S17).

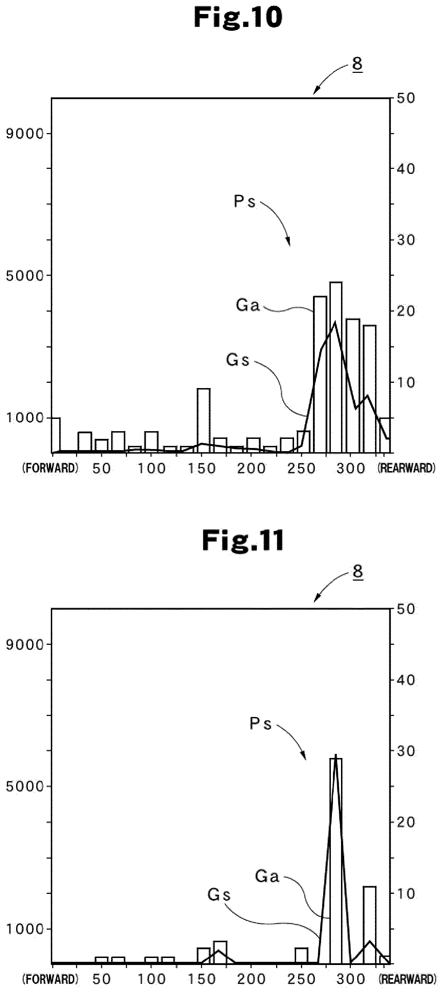

Figs. 10 to 13 show examples of various generation patterns Ps. Figs. 10 and 11 show generation patterns Ps in the case where "GPPS (general-purpose polystyrene) resin" was used as the molding material R and the band-pass frequency Bs was set to 50 to 60 kHz, wherein Fig. 10 shows the case where the heating temperature was set to "170°C (low temperature)," and Fig. 11 shows the case where the heating temperature was set to "200°C (optimum temperature).

The frequency range of 50 to 60 kHz set as the band-pass frequency Bs is a frequency range in which generation of AE waves due to breakage of plastic is expected. As is apparent from the generation patterns Ps shown in Figs. 10 and 11, the following can be confirmed. Fig. 11 shows a normal plasticized state; i.e., the aggregated value of the sets of attack number data Da and the aggregated value of the sets of event count data De temporarily become large at the beginning of plasticization. In contrast, Fig. 10 shows that the number of sets of generated attack number data Da and the number of sets of generated event count data De increase, and that they are generated over a wide region of the heating cylinder 2 in the forward-rearward direction Fs, in particular, in a region near the forward end of the heating cylinder 2, which means the state of insufficient plasticization.

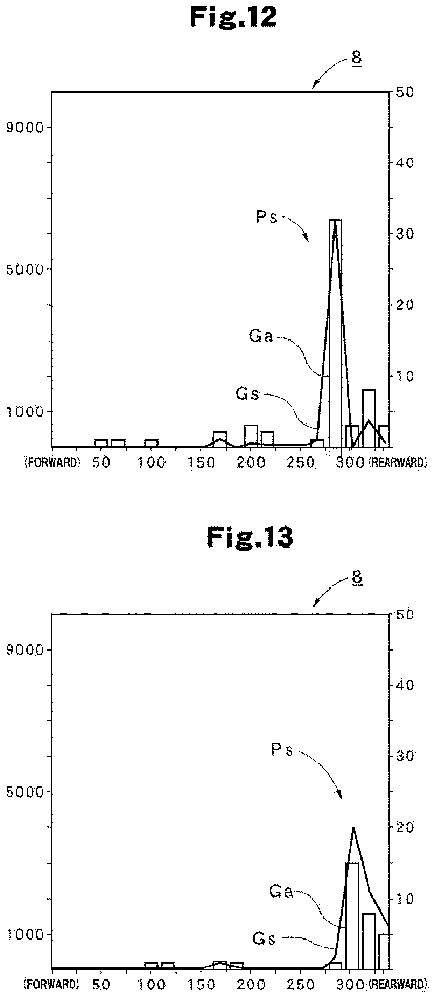

Fig. 12 shows a generation pattern Ps in the case where the heating temperature was set to "240°C (high temperature) although the basic conditions were the same as the case of Fig. 11. As is apparent from Fig 12, the plasticized state does not differ greatly as compared with that in the case shown in Fig. 11 where the heating temperature was "200°C (optimal temperature).

Fig. 13 shows a generation pattern Ps in the case where the band-pass frequency Bs was set to 220 kHz although the basic conditions were the same as the case of Fig. 11. As is apparent from Fig. 13, it is possible to confirm that, although an unmelted molding material R comes into contact with the screw 5 in a rear portion of the heating cylinder 2 and thus the attack number data Da and the event count data De are generated, the attack number data Da and the event count data De are rarely generated after that, which means that the plasticized state is normal.

It is possible to confirm from the above that each generation pattern Ps graphically displayed by the graphic display section 8 reflects the plasticized state. Accordingly, the operator or the AI can perform the diagnosing process, including determination as to whether or not the plasticized state is good, and determination as to whether or not a trouble has occurred on the basis of generation of an abnormal sound. Furthermore, it is possible to increase the accuracy of diagnosis by accumulating the generation patterns Ps as big data and learning them.

The results of this diagnosis can be displayed on the display screen of the display 42d as the result of determination as to whether or not the plasticized state is good or determination as to whether or not an anomaly has occurred. Alternatively, the results of this diagnosis can be output as control instructions for necessary stoppage control and operation control (step S18).

The plasticized state diagnosing apparatus 1 (plasticized state diagnosing method) for the injection molding machine M according to the present embodiment includes, as basic configurational elements, the plurality of AE sensors 6r and 6f which are disposed on the heating cylinder 2 at a plurality of positions Xr and Xf in the forward-rearward direction Fs and detect AE waves We, the data processing section 7, and the graphic display section 8. The data processing section 7 includes the position computing process section Ex, the attack number computing process section Ea, and the event count computing process section Ee. The position computing process section Ex obtains, on the basis of arrival times tr and tf of each AE wave We obtained from the AE sensors 6r and 6f, position data Dx related to the generation position of the AE wave We. The attack number computing process section Ea obtains, for each combination of a predetermined sampling period Tp and a predetermined set of the position data Dx, as attack number data Da, the number of times the AE wave signals Sre and Sfe related to the generated AE wave We have exceeded the threshold value L set beforehand. The event count computing process section Ee obtains, as event count data De, the number of AE wave signal components Sp having exceeded the threshold value L set beforehand. The graphic display section 8 graphically displays at least the generation pattern Ps of sets of the attack number data Da and sets of the event count data De which correspond to sets of the position data Dx. Therefore, it is possible to accurately obtain information related to generation of AE waves, from the viewpoint of the position along the plane of the heating cylinder 2 (three-dimensional position) and qualitative information related to generation of AE waves, such as the position in the heating cylinder 2 where an AE wave We is generated and the cause of generation of the an AE wave We. Thus, it becomes possible to realize a more practical, convenient, and easy-to-use monitoring device 1, and perform accurate and reliable diagnosis for determining whether or not the plasticized state is good and for trouble judgment.

The preferred embodiment has been described in detail. However, the present invention is not limited to such embodiment, and, as to structures of details, shapes, quantities, etc., alteration, addition, and deletion can be performed arbitrarily within a range not departing from the gist of the present invention.

For example, the case where the AE sensors 6r and 6f are disposed on the heating cylinder 2 at two positions (on the rearward side and the forward side) has been described. However, in general, the AE sensors 6r, etc. may be disposed at a plurality of positions; i.e., two or more positions. The rearward side and the forward side of the heating cylinder 2 where the AE sensors 6r and 6f are disposed show their relative positional relation and do not show their absolute positions. Therefore, the position on the forward side means that the position on the forward side is present forward of the position on the rearward side and does not mean that the position on the forward side is the absolute position present at a forward portion of the heating cylinder 2 and may be present at a middle portion or a rear portion of the heating cylinder 2. Although it is desired to perform the noise removal process and the filtering process, they are not essential constituent elements. Although it is desired that the graphic display section 8 displays, in a graph form, the generation pattern Ps of sets of the attack number data Da and sets of the event count data De which correspond to sets of the position data Dx, any of graphic display forms other than graph forms can be employed so long as it is possible to graphically display the generation pattern Ps and enable the operator to grasp the generation pattern Ps.

### Industrial Applicability

The plasticized state diagnosing method and the plasticized state diagnosing apparatus according to the present invention can be used for various types of injection molding machines in which a molding material supplied into the heating cylinder is plasticized by rotation of the screw.

### Reference Signs List

1: plasticized state diagnosing apparatus, 2: heating cylinder, 3f, etc.: heating unit, 4: material supply section, 5: screw, 6r: AE sensor (first AE sensor), 6f: AE sensor (second AE sensor), 7: data processing section, 8: graphic display section, 9: temperature sensor, M: injection molding machine, R: molding material, Fs: forward-rearward direction, Xr: position on heating cylinder, Xf: position on heating cylinder, We: AE wave, tr: arrival time, tf: arrival time, Sre: AE wave signal, Sfe: AE wave signal, L: threshold value, Ps: generation pattern, Ex: position computing process section, Ea: attack number computing process section, Ee: event count computing process section

### Citation List

Patent Document 1: JP2012-111091A

## Claims

1. A plasticized state diagnosing method for an injection molding machine in which a molding material supplied into a heating cylinder heated by a heating unit is plasticized by rotation of a screw, the molding material being supplied from a material supply section provided at a rear portion of the heating cylinder,
the plasticized state diagnosing method, which diagnoses a plasticized state of the molding material, comprising the steps of:
disposing a plurality of AE sensors on the heating cylinder at a plurality of different positions in a forward-rearward direction so as to detect AE waves;
obtaining position data related to a position where each AE wave is generated on the basis of arrival times of the AE wave obtained from the AE sensors;
for each combination of a predetermined sampling period and a predetermined set of the position data, obtaining, as attack number data, the number of times AE wave signals related to the generated AE wave have exceeded a threshold value set beforehand, and obtaining, as event count data, the number of components of the AE wave having exceeded a threshold value set beforehand; and
graphically displaying at least a generation pattern of sets of the attack number data and sets of the event count data which correspond to sets of the position data.

2. A plasticized state diagnosing method for an injection molding machine according to claim 1, wherein the threshold values for detection of the attack number data and the event count data are set to the same value.

3. A plasticized state diagnosing method for an injection molding machine according to claim 1, wherein the threshold values for detection of the attack number data and the event count data are set to values different from each other.

4. A plasticized state diagnosing method for an injection molding machine according to claim 1, wherein a noise removal process is performed on the detection signals obtained from the AE sensors, wherein the noise removal process removes, as noise components, signals mixedly present other than those generated as a result of a plasticization process by the heating cylinder.

5. A plasticized state diagnosing method for an injection molding machine according to claim 1, wherein a filtering process for selecting signals of a particular frequency set beforehand is performed on the detection signals obtained from the AE sensors.

6. A plasticized state diagnosing method for an injection molding machine according to claim 1, wherein a filtering process for selecting signals within a particular frequency band set beforehand is performed on the detection signals obtained from the AE sensors.

7. A plasticized state diagnosing apparatus for an injection molding machine in which a molding material supplied into a heating cylinder heated by a heating unit is plasticized by rotation of a screw, the molding material being supplied from a material supply section provided at a rear portion of the heating cylinder,
the plasticized state diagnosing apparatus, which diagnoses a plasticized state of the molding material, comprising:
a plurality of AE sensors disposed on the heating cylinder at a plurality of different positions in a forward-rearward direction so as to detect AE waves;
a data processing section; and
a display section;
wherein the data processing section includes:
a position computing process section which obtains position data related to a position where each AE wave is generated on the basis of arrival times of the AE wave obtained from the AE sensors;
an attack number computing process section which obtains, for each combination of a predetermined sampling period and a predetermined set of the position data, as attack number data, the number of times AE wave signals related to the generated AE wave have exceeded a threshold value set beforehand; and
an event count computing process section which obtains, as event count data, the number of components of the AE wave having exceeded a threshold value set beforehand, and
wherein the graphic display section graphically displays at least a generation pattern of sets of the attack number data and sets of the event count data which correspond to sets of the position data.

8. A plasticized state diagnosing apparatus for an injection molding machine according to claim 7, wherein the graphic display section displays, in a graph form, a generation pattern of the attack number data and the event count data which correspond to the position data.

9. A plasticized state diagnosing apparatus for an injection molding machine according to claim 7, wherein the AE sensors include a first AE sensor and a second AE sensor, the first AE sensor is disposed on a rear side of the heating cylinder, and the second AE sensor is disposed on a forward side of the heating cylinder.

10. A plasticized state diagnosing apparatus for an injection molding machine according to claim 9, wherein each of the AE sensors is separately attached to the heating cylinder.
